# EUROPEAN PATENT APPLICATION

(11) **EP 2 605 432 A1**
(43) Date of publication of application: **19.06.2013**
(21) Application number: 11250923.7
(22) Date of filing: 12.12.2011
(51) Int. Cl.: H04H 60/00, H04N 21/4722, H04N 21/439

(54) **Communications system**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

Supplementary data associated with a broadcast transmission (5, 26) is made available to the viewer by identifying the content currently being received at a user terminal 3, by sampling the acoustic output of the receiving device 1. The user generates a request for data which includes the sampled content. This request is transmitted from the user terminal 3 to a content provision processor 4. The content provision processor retrieves supplementary data associated with the identified broadcast content and delivers the supplementary data required.

## Description

This invention relates to communications systems, and in particular to systems which integrate broadcast and interactive services.

A feature of modern digital broadcast services is the provision of supplementary data or associated channels, accessible in response to a user input which causes the supplementary data to be displayed instead of, (or as well as), the original channel. Such data may include subtitles, additional information on a particular item in a broadcast etc. However, viewing such additional data at the time of transmission can disrupt the viewing of the main broadcast programme.

The present invention provides a system by which supplementary information can be accessed during the broadcast programme, or subsequently. Some embodiments also allow the information to be retrieved even if the programme is not viewed at the time of broadcast but as a recording.

It is also known to provide broadcast or streamed audio-visual material to a general-purpose computer over a communications network such as the internet. It is also known to provide communications units which, in addition to accepting input data from a broadcast service (e.g. through a standard television aerial) can also be connected to a data communications network such as the Internet. Such systems use the data communications network for download of additional services such as electronic programme guide (EPG) data. Unlike the broadcast input, the data communications network connection is bi-directional, so it can also be used for services requiring an uplink, such as "on-demand" streaming services. Input from both sources (broadcast and internet) is converted by the communications unit to a form suitable for display on a monitor device, typically a standard television receiver. The communications unit is typically controlled by a remote-control unit.

International Patent specification W02008/080006 (Apple) describes a process in which the user of a portable media player connected to a broadcast receiver, can use it to request supplementary information relating in some way to the broadcast content by detecting 'tags' embedded in the broadcast content.

One known system developed by Backchannelmedia Inc of Boston, Massachusetts, inserts data into broadcast content which causes icons to be displayed on suitably configured receiver equipment. If a user operates a control whilst the icon is on display it causes an Internet address "hyperlink" associated with the icon to be stored in a location from where it can be accessed subsequently by the user.

The applicants' earlier International Patent application, published as WO2011/108599, adopts a different approach, which avoids the need to modify the broadcast content. This provides a method of retrieving supplementary data associated with a broadcast transmission by identifying the broadcast content currently being received at a receiver, generating a request for data, the request including the identity of the broadcast content, transmitting the request to a content provision processor, at the content provision processor retrieving supplementary data associated with the identified broadcast content and delivering the supplementary data so identified to a predetermined delivery address other than that of the generator of the request. The earlier application also provides a user terminal, typically operated by a remote control unit, and a content provision processor which co-operate to perform the method set out above.

The term "broadcast content" is used here to mean any content made available to a large number of receivers, either simultaneously or on demand. If the content is transmitted and viewed in real time, the identification of the broadcast content for which supplementary data is required can be made by identifying the channel currently being viewed and the time of the request, the concordance then being made with the transmission schedule of the channel in question. Delivery of such content may be over a conventional television broadcast system using wireless transmitters, or by cable access or over a general data communications system such as the Internet. The latter may be used for broadcast-type services or on-demand services.

The earlier application also discloses the use of "fingerprinting", in which an extract of the content is transmitted to the content provision processor to identify the content in question. This method would allow content to be identified when viewed "on demand", or as a replay of a recording made by the user.

The present invention provides a variant of this principle, which allows a device, other than the receiver of broadcast material, to be used to retrieve the supplementary data. According to this invention, there is provided a method of retrieving supplementary data associated with a broadcast transmission by sampling a signal generated by the output of a user interface of a broadcast receiver in response to reception of the broadcast signal, generating a request message, the request message including a copy of the sampled signal, and transmitting the request message to a content provision processor, and at the content provision processor, receiving the sampled signal, identifying from the sampled signal the broadcast content from which it is derived, and retrieving supplementary data associated with the broadcast content so identified for return to one or more addresses specified in the request.

In the embodiments to be described, the output to be sampled is an acoustic signal, namely the sound generated by the loudspeakers of a television or radio receiver, which is detected by a microphone in the device which is to perform the sampling. However, the principles of the invention may also be applicable to a visual output, detectable by a camera, or other user-readable output.

The supplementary data to be transmitted may be the required content itself, or it may be in the form of a data message giving access details for more detailed content, for example an address on a publicly accessible data network such as a "url" (Universal Resource Locator).

The user input may be used to identify a destination, (which may be other than the user terminal from which the request is generated), to which the supplementary data is to be delivered.

The data request may include metadata as well as the sampled content. Such metadata may be provided by a user action through the user input 32 on the user terminal. Such metadata may include an offset time, the broadcast content for which supplementary data is required being identified in accordance with the sampled signal and the offset time. This will allow a user to select data relating to a portion of the broadcast that has recently passed, to allow time for the user to recognise that that content is of interest, and to locate and operate the sampling device. The request may also include other metadata, such as a request to identify an actor, location, tune etc in the content, or to specify the return address or the form in which returned information content should be provided.

To simplify the identification of the content, the user may be invited to provide other metadata, for example to identify the broadcast channel on which the content is being delivered, (or from which the content was recorded, if the content is not being watched at the time of broadcast). If the device generating the request is connected to the same internal network as the receiver of the broadcast channel, for example through a "Bluetooth or wireless local area network (WLAN or "wifi") then it may interrogate the receiver to identify metadata associated with the content currently being played by the receiver, such as the channel to which the receiving device is currently tuned. The device can then add said metadata in the request for additional content. Because of the possibility of the user having paused the transmission, or viewing a recording of a programme downloaded from one channel whilst receiving a programme on a second channel for subsequent viewing, the channel to which the receiver is tuned is not, on its own, a reliable indication of the content being currently viewed, so the audio content is useful additional information.

Signals may be encoded in the broadcast transmission which generate acoustic output from the receiver that is not audible to a normal human listener, with the sampling process arranged to identify such encoded signals for transmission in the data request.

The invention also extends to a user terminal arranged to co-operate with a content provision processor to perform the method of the invention.

In the earlier application, the required data is downloaded to a device other than the requesting device, which is also the device receiving the broadcast data, in order not to interrupt viewing of the broadcast data. The present invention allows the separation of the requesting function and the display of broadcast material, so the requested material can be downloaded to the device making the request without interrupting viewing of the broadcast material. It may nevertheless also be used to select another destination to which the supplementary data is to be delivered.

An embodiment of the invention will now be described, by way of example, with reference to the Figures, in which:
Figure 1 is a schematic illustration of the various elements cooperating to form the invention.
Figure 2 is a schematic diagram of the communications device shown in Figure 1
Figure 3 is a schematic diagram of the content provision processor shown in Figure 1
Figure 4 is a flow diagram illustrating the information flows taking place during the operation of the invention

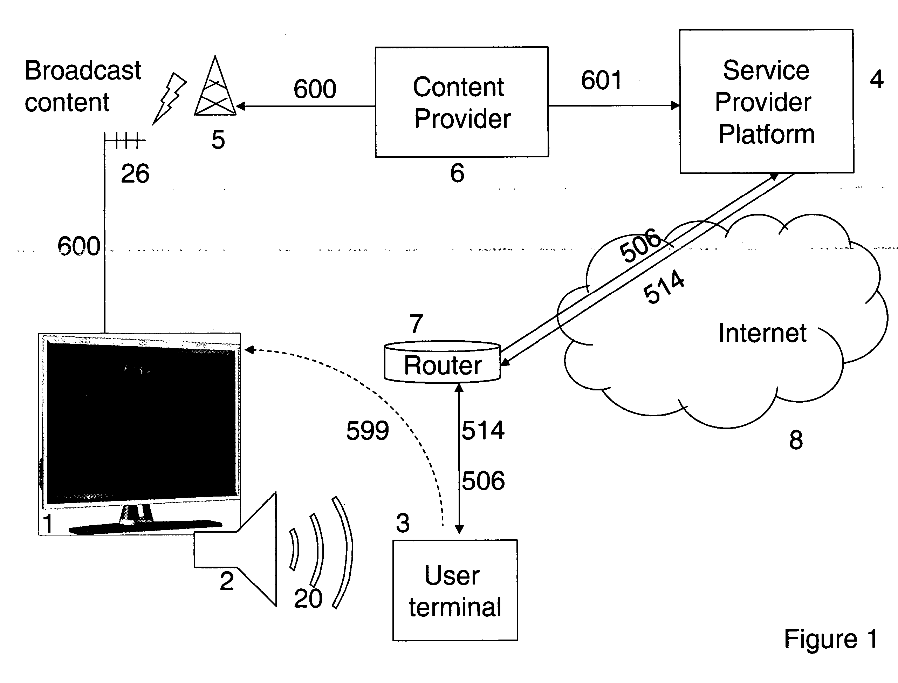

As depicted in Figure 1, a user terminal 3 has a data connection through a router 7 which acts as the interface between the user equipment 3 and a data communications network 8 such as the Internet. The connection may use any suitable medium, wired or wireless. The router 7 may be a publicly accessible network access point, or it may be part of a private local network. Other types of data connection may be used instead, such as a "3G" cellular connection.

Also shown in Figure 1 is a content provision processor 4 accessible from the data communications network 8. This processor has a data feed 601 from a content provider 6. Although shown as a single entity, the content provider 601 may in practice comprise a number of individual parties interacting directly or indirectly with the service provider 4.

The content provider 6 also transmits broadcast material 600 through a broadcast medium 5 for reception by a receiving device 26 for display on a broadcast receiver 1 having an audio output 2, such as a radio or television set 1. The broadcast medium 5, 26 may be wireless as depicted, or it may be made through a cable connection.

If the television set 1and user device 3 both have connectivity to a private network, as depicted in Figure 1, the user device 3 may be configured to transmit commands 599 to the television set 1 through the network's router 7, in order to operate as a remote control unit.

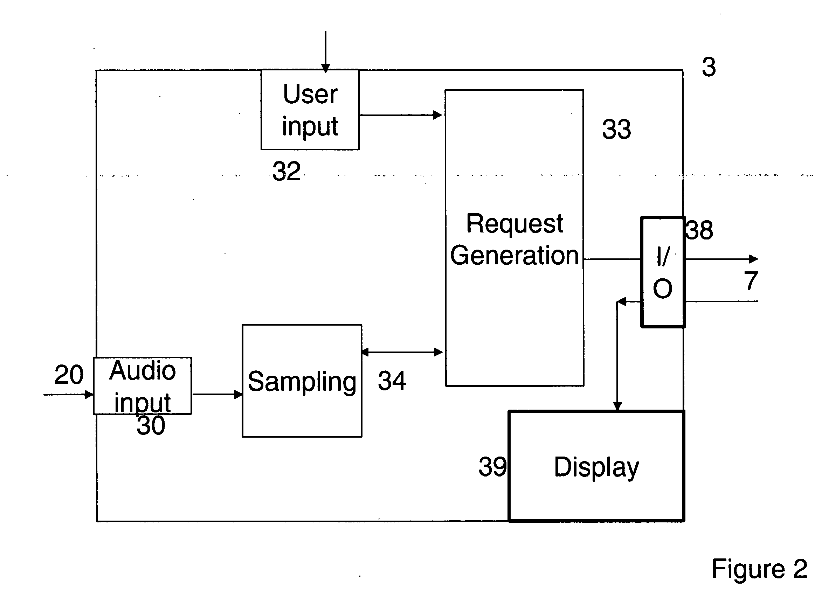

Figure 2 depicts the functional elements of the user terminal 3 relevant to the operation of the present invention. The terminal may be any device having internet connectivity, such as a "smart phone", programmed with a software application to provide the capabilities required to operate the invention, which will now be described. The software application may be downloaded to the terminal by any suitable medium. As is conventional, the device also has a user input 32, typically a keypad or touchscreen, an audio input 30, typically a microphone, an interface unit 38 for connection to a data network, and a display 39, typically a screen. Such devices often also include a camera, which may be used in some embodiments to sample visual content generated by the television set 1.

An information request generation unit 33 is responsive to the input 32 to operate a sampling unit 34 to extract a sample of the audio signal 20 currently received at the audio input 30. The sample is coded to an acoustic fingerprint or "tag" such as used by the music discovery search engine "Shazam", and the tag forms part of the request to be transmitted by the request generation unit 33. The sampling unit 34 may incorporate a buffer to allow content recently produced by the television set 1 to be used. The user input 32 may allow a time delay value to be identified, for example 30 seconds previously, and that time offset to be included as part of the request message generated by the request generation unit 33.

If the broadcast receiver 1 is itself connected to the router 7, for example for download of electronic programme guide (EPG) data or video on demand services, the user terminal 3 may be configured to operate as a remote control device for the receiver, by transmitting commands 599 by way of the router 7.

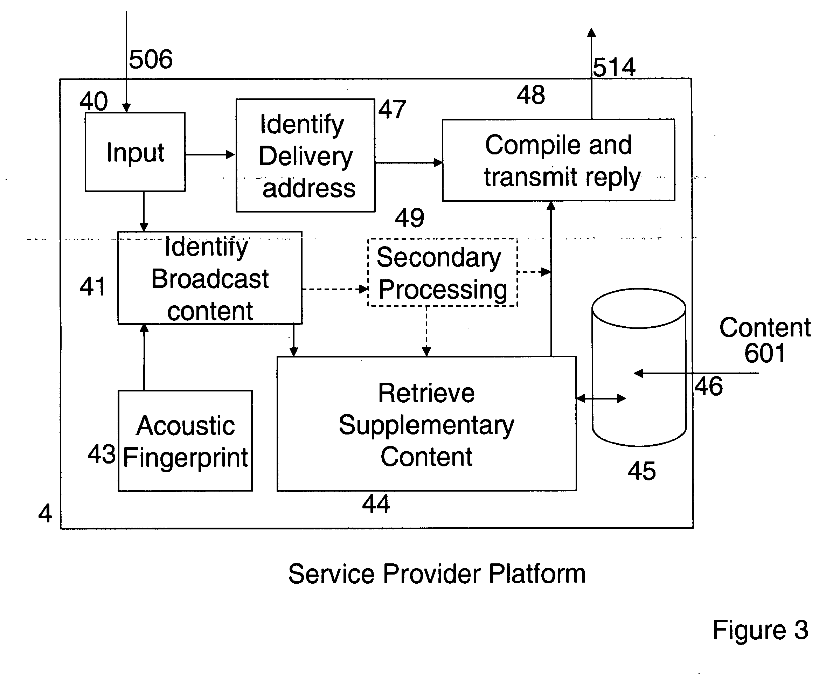

Figure 3 illustrates the functional elements required at a service provider's platform 4 to operate as a content provision processor suitable for co-operation with the user terminal of Figure 2. Although depicted as an integrated unit, the various functional elements may be distributed amongst several items of hardware, and may be duplicated for capacity or reliability.

The content provision processor 4 has a store 45 for supplementary data provided through an interface 46 with one or more content providers 5. The content provision processor 4 also has an acoustic fingerprinting processor 43 for identifying content from a sampled extract. The content provision processor 4 has an input unit 40 connected to a data communications network 8 for receiving information requests from user terminals 3 connected to the network. This input is analysed by a broadcast identification unit 41 which identifies the primary content being viewed at the time the request was made from analysis of the content 43. Any time offsets included in the request data can be allowed for, to determine what content was being broadcast previous to the identified content by an interval equivalent to the offset value.

The content to be identified may be directly related to the sound detected, such as product information linked to an advertising jingle. Alternatively, it may only have an indirect relationship, for example subtitles or other supplementary data relating to a particular broadcast programme, identified by its audio signature.

It should be noted that the audio input 30 cannot directly identify the broadcast channel from which the television set 1 received the content currently displayed by the receiver 1. Nor can it determine the time of broadcast, as the viewer may be watching recorded material which was broadcast some time previously. In order to simplify the process of identifying the broadcast from which the audio file was sampled, the original broadcast content may include an on-screen "prompt' instructing the user to operate the input 32 at a specified moment in the programme. This ensures that the sampling process is performed on the particular content being displayed at the time the prompt is shown, simplifying the comparison process to be performed by the analyser 41. In another possibility, the broadcast content may incorporate an encoded audio message, not audible to the viewer of the programme but detectable by the audio input 30 and sampling system 34, identifying the content to be supplied.

If the broadcast receiver 1 is connected to the router, and the user terminal 3 is in use as a remote control for the receiver, the terminal may be able to determine the channel to which the receiver 1 is tuned, again assisting in identifying he required content.

A supplementary data retrieval unit 44 is controlled by the broadcast identification unit 41 to retrieve content related to the identified content. This content can be a universal resource locator (url) or Internet address giving access to more comprehensive data.

An addressing unit 47 is provided to extract return address data incorporated in a request received at the input 44. A reply compiler 48 generates a reply, for example in the form of an email, addressed to the return address retrieved by the addressing unit 47 and containing the supplementary data retrieved by the supplementary data retrieval unit 44, and transmits it through the data communications network 8 to the requesting device 3, or such other network address as the initial request may specify.

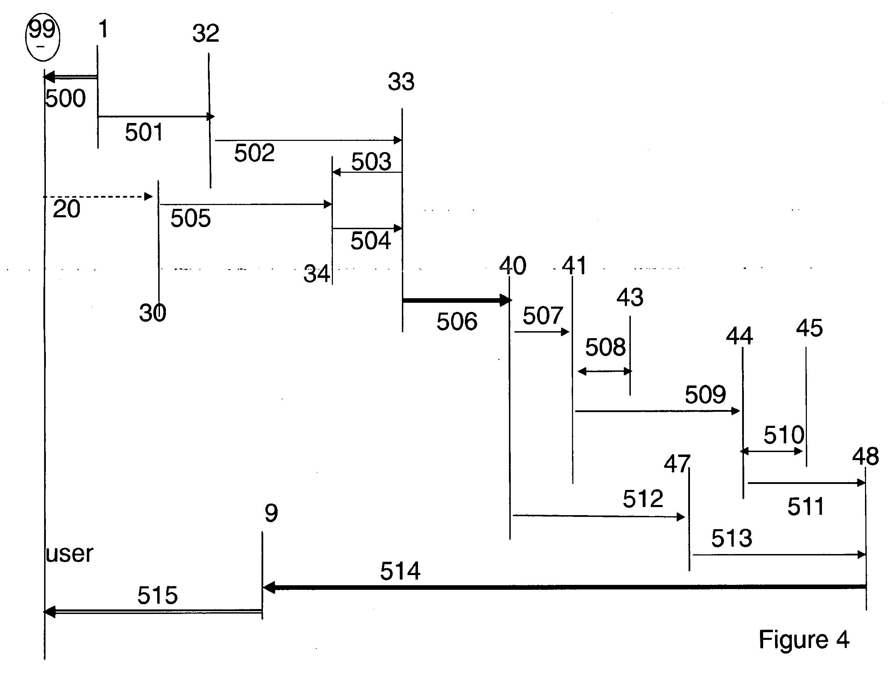

In operation, the co-operating elements of the invention perform as will now be described with reference to Figure 4.

A viewer 99 seeing an item of interest 500 on the broadcast receiver 1 may wish to have more information than is contained in the transmission. For example, a short advertisement may prompt the viewer to seek further details. The content of the advertisement may mention that users who have the invention installed in their user terminals can seek further details of the advertised product or service by pressing the appropriate button on their user device 3 to initiate the method of the invention. As mentioned above, non-audible metatags or other extra data may be overlaid into the broadcast content for detection by the user device 3.

The further information is available at a location 45 in the content provision processor 4 operated by the service provider. This data is typically an email address or url (universal resource locator) for the advertiser's website. As the data to be delivered to the user comes from a single platform operated by a provider to whom the user has subscribed, the user can have confidence that he is not exposing himself to unknown or unfamiliar websites, and after receiving the contact details he can review them before deciding whether to establish contact with the advertiser itself. Again, because the content 45 is provided by the user's service provider, content can also be tailored to individual users, for example by providing a variant appropriate to the user's address or preferred language, or by barring access to inappropriate sites if the user has requested such a restriction.

In order to obtain this information, the user 99 operates a special key or sequence of key strokes on user input 32 (step 501). In response to the keystroke or sequence of such strokes the control unit transmits a control signal 502 to the request generation unit 33. In the simplest form of the invention this control signal 502 simply causes the request-generation function (503, 504) to be initiated. However, more complex requests may be made available, for example to select between different types of content associated with the currently-received content, such as whether information is required relating to the current advertisement or the one preceding it. This feature would allow a i user time to locate the device 3, and /or decide whether he requires the supplementary data. The control signals may also be used to differentiate different addresses 9 to which the supplementary data may be sent, for example to allow content to be sent to a device other than the device 3 making the request.

In the embodiment of Figure 2 the request generation unit 33 transmits an instruction (503) to a sampling unit 34 to take an extract 505 from the content 20 currently being output from the audio output 2 of the broadcast receiver 1 and detected by the audio input (microphone 30) of the user terminal 3. In one preferred embodiment a buffering facility is provided so that the sampling unit can extract the content that had been detected immediately before the user 99 generated the request 501, 502. The buffering period may be adjusted to allow material from either the current advertisement or a previous one to be extracted.

The sampling unit 34 generates a sound file 504 which is returned to the request generation unit 33.

The request generation unit 33 now compiles a data request 506. The data requests includes the sound file 504, along with any supplementary information such as an offset time, address to which the data is to be sent, etc. The data request 506 is transmitted over the data communications network 8 to the content provision processor 4.

The content provision processor responds to such data requests as follows. The sound file is forwarded to an analysis unit 41, which interrogates a database 43 (step 508). The database 43 performs an "acoustic fingerprint" process to identify the content. For advertising material, the fingerprint may be a "jingle" or a readily-identifiable trade mark or strap-line. Alternatively, as discussed above, it may be metadata incorporated in the audio element 20 of the broadcast 600.

If the primary content is not identifiable by the analysis unit, (which may be because it is not contained in the acoustic fingerprint database 43, or is distorted or otherwise unidentifiable because of background noise) the content may be routed to a queue 49 for secondary processing, for example by a human analyst, who may identify the appropriate content 45 or return an message to report that no relevant content can be retrieved. The data provided by the operator can be added to the database to answer similar requests.

To reduce the amount of such secondary processing, the service provider may continuously sample transmissions as they are broadcast, to allow commonly-requested data to be provided readily, so that only less commonly-requested data request need be routed to a human operator.

Having identified the primary content, the content provision processor 4 then passes the request to a retrieval unit 44 (step 509) to retrieve the supplementary data associated with it (step 510). The supplementary data is maintained in a store 45 to which content is delivered either by the service provider 4 itself, or by the various content providers 6. This supplementary data typically consists of a link to the advertiser's website.

The supplementary data is delivered (step 511) to a message compiler 48 which generates a reply 514 to the original data request 506. In the preferred embodiment this reply is a message addressed to the user's email address 9, identified in an addressing unit 47 which retrieves the user identity from the input 506 (step 512), converts it to a user address 513 which it passes it to the message compiler. The reply address could instead be for example an IP address, a telephone number (for receipt of a text message), the network address of a similar device such as another user's set-top box, or a postal address (to generate an automated mailshot). The message contains the supplementary data 511 retrieved from the store 45. The message complier 48 may tailor this message to the individual customer according to details held on the service provider's own customer database, such as location, content restrictions, etc.

The compiled message 514 is then transmitted over the data communications network 8 to the user address 9 specified in the address header 513. As shown in Figure 1, the destination user address 9 is served by the same network interface router 7 as the user terminal 2 from which the request is transmitted, but this is not limitative - the destination can be any internet address specified by the user or, if an alternative medium is selected such as text message or as a mailshot, the appropriate addressing format for that medium (telephone number, postal (ZIP) code, etc).

The message 514 can then be viewed by the user 99 (step 515) at a time and place convenient to him without interrupting his own viewing of the original programme content 500, or the viewing of anyone else watching with him.

## Claims

1. A method of retrieving supplementary data associated with a broadcast transmission by sampling a signal generated by the output of a user interface of a broadcast receiver in response to reception of the broadcast signal, generating a request message, the request message including a copy of the sampled signal, and transmitting the request message to a content provision processor, and at the content provision processor, receiving the sampled signal, identifying from the sampled signal the broadcast content from which it is derived, and retrieving supplementary data associated with the broadcast content so identified for return to one or more addresses specified in the request.

2. A method according to claim 1, wherein a user input selects an offset time and the broadcast content for which supplementary data is required is identified in accordance with the with the sampled signal and the offset time.

3. A method according to claim 1 or claim 2, wherein the supplementary data is transmitted in the form of a data message including access details for more detailed content.

4. A method according to claim 1, claim 2, or claim 3, wherein a user input identifies to which of a plurality, of predefined digital or physical addresses the supplementary data is to be delivered.

5. A method according to claim 1, claim 2, claim 3 or claim 4, wherein the device generating the request is arranged to communicate with the receiver of the broadcast content, and the device generating the request interrogates the receiver to identify metadata associated with the content currently being played by the receiver, and includes said metadata in the request for additional content.

6. A method according to claim 1, claim 2, claim 3, claim 4 or claim 5, wherein the content is sampled to identify signals encoded therein that are not audible to a normal human listener.

7. A method according to claim 1, claim 2, claim 3, claim 4, claim 5 or claim 6, wherein the content to be sampled is an acoustic output from a loudspeaker.

8. A method according to claim 1, claim 2, claim 3, claim 4, claim 5, claim 6 or claim 7, wherein requested content that is unmatched is routed to a queue for secondary processing.

9. A communications terminal for performing the method of claim 1, claim 2, claim 3, claim 4, claim 5, claim 6, claim 7 or claim 8, the terminal comprising a detector for detecting a signal, a sampling unit for making a recording of part of the signal, a processor for generating a request for additional content associated with the received content, and a transmitter for transmitting the generated request, together with the recording, to a predetermined service provider.

10. A terminal according to claim 8 or claim 9, wherein the controller is capable of selecting an offset time between the time of sampling the signal and the time of the content for which associated content is required.

11. A terminal according to claim 8, claim 9, or claim 10, wherein the processor is capable of selecting to which of a plurality of destinations the supplementary data is to be delivered.

12. A terminal according to claim 8, claim 9, claim 10, or claim 11, wherein the content is acoustic and the detector and sampling unit are arranged to detect signals encoded in the acoustic content that are not audible to a normal human listener.

13. A diagnostic processor according to any preceding claim, configured as software downloadable from a service provision platform

14. A service provider content provision processor for performing the method of claim 1, claim 2, claim 3, claim 4, claim 5, claim 6, claim 7, or claim 8, having an input for receiving a message requesting data supplemental to broadcast data, the request including a sample of content derived from the broadcast data, an identification processor for identifying the sampled content, and for identifying from the sampled signal the broadcast content from which it is derived, a data retrieval processor for retrieving supplementary data associated with the broadcast content so identified, and an output for delivering the supplementary data to one or more addresses specified in the request message.

15. A content provision processor according to claim 14, wherein the identification processor is arranged to identify broadcast content in accordance with the sampled signal and additional metadata identified in the request for additional content.

16. A content provision processor according to claim 14 or claim 15, wherein the identification processor has a request handler for routing sampled signals which are not identified by the identification processor to a queuing system for secondary processing.
